# EUROPÄISCHE PATENTSCHRIFT

(11) **EP 0 468 348 B1**
(45) Veröffentlichungstag und Bekanntmachung des Hinweises auf die Patenterteilung: **02.08.1995**
(21) Anmeldenummer: 91111909.7
(22) Anmeldetag: 17.07.1991
(51) Int. Cl.: B60N 2/38

(54) **Vorrichtung zum Befestigen eines Sitzes auf einem Fahrzeug**
Device for attaching a seat to a vehicle
Dispositif pour monter un siège dans un véhicule

(30) Priorität: 25.07.1990 US 558037
(43) Veröffentlichungstag der Anmeldung: 29.01.1992
(73) Patentinhaber: DEERE & COMPANY, Moline, Illinois 61265 (US)
(72) Erfinder: Holm, David Roy, Oconomowoc, Wisconsin 53066 (US); Buehler, Edgar John, Pewaukee, Wisconsin 53072 (US)
(74) Vertreter: Feldmann, Bernhard

(56) Entgegenhaltungen:
- FR-A- 2 031 438
- GB-A- 1 169 279
- US-A- 4 114 947
- US-A- 4 198 092
- US-A- 4 307 865
- US-A- 4 549 765
- US-A- 4 588 225

## Beschreibung

Die Erfindung bezieht sich auf eine Vorrichtung zum Befestigen eines Sitzes auf einem Fahrzeug, beispielsweise einem Kompaktschlepper für die Garten- und Rasenpflege, wozu ein erster mit dem Fahrzeug verbundener Teil und ein zweiter mit dem Sitz verbundener Teil vorgesehen ist, der eine der Teile zwei in Fahrtrichtung verlaufende Längsschlitze aufweist, beide Teile in der Betriebsstellung des Sitzes gegeneinander anliegen, beide Teile in der Betriebsstellung des Sitzes über mindestens zwei Schraubverbindungen festsetzbar sind und beide Teile bei gelockerten Schraubverbindungen gegeneinander verschiebbar sind, wobei jede Schraubverbindung eine durch einen Längsschlitz geführte Schraube aufweist.

Herkömmliche für den Fahrer bestimmte Sitze können in unterschiedlichster Weise auf dem Fahrzeug angeordnet sein. Allen ist aber gemeinsam, daß sie in Fahrtrichtung verschiebbar ausgebildet sind, um den unterschiedlichen Fahrergrößen Rechnung zu tragen. Luxussitze sind, wenn es die räumlichen Verhältnisse erlauben, auf Gleitschienen angeordnet und mit einer aufwendigen und viele Einzelteile aufweisenden Verriegelungsvorrichtung ausgestattet (US-A-4 666 208).

Weniger aufwendige Sitzlängsverstellvorrichtungen, wie die Vorrichtung, von der die Erfindung ausgeht (US-A-4 549 765), weisen in Längsschlitzen verschiebbare Schrauben auf, nach deren Lösen der Sitz längsverstellt werden kann. Bei der bekannten Vorrichtung besteht der mit dem Sitz verbundene Teil aus zwei, Querabstand zueinander aufweisenden u-förmig ausgebildeten Blattfedern, in deren dem Anschluß an dem Fahrersitz abgelegenen Enden, jeweils zwei Längschlitze eingearbeitet sind, die mit zwei Konsolen am Fahrzeug über vier Schrauben verbunden sind. Der Abstand der Schrauben und die Länge der Längschlitze bestimmen den Schiebeweg, d. h. je länger der Längsschlitz um so größer ist der Verstellbereich. Damit der Sitz sich während seines Einsatzes nicht verschiebt, müssen die vier Schrauben sehr fest angezogen werden, was von Hand fast unmöglich ist. Nach einem längeren Einsatz lockern sich normal angezogene Schrauben und der Fahrersitz verstellt sich selbsttätig unter dem Gewicht des Fahrers, was wegen der damit verbundenen Gefahren unerwünscht ist. Die Befestigung über vier Schrauben, gegebenenfalls unter Zuhilfenahme von Werkzeug, ist aufwendig. Vier Schrauben sind aber bei solchen Vorrichtungen erforderlich, damit der Sitz sich nicht um eine Vertikalachse verstellt und ein Abscheren der Schrauben vermieden wird. Andererseits ist es aber auch nicht mehr neu (JOHN DEERE Kompaktschlepper 420) einen Sitz in seiner Betriebsstellung über nur zwei von Hand betätigbare Schrauben bzw. Mutter festzusetzen. Allerdings sind dann anstelle der beiden anderen Schrauben zwei Gleitelemente erforderlich.

Für einen Omnibussitz wurde bereits vorgeschlagen (US-A-4 114 947), die Füße des Sitzes, von denen an jeder Sitzseite zwei vorgesehen sind, auf einer im Vergleich mit dem Omnibusboden tiefer gelegenen in Fahrtrichtung verlaufenden Führungsbahn anzuordnen, die oberenends durch Schenkel, deren freie Enden zueinander Abstand aufweisen, teilweise verschlossen ist. In den freien Enden sind sich gegenüberliegende Einbuchtungen in Form von Kreisabschnitten derart vorgesehen, daß sich gegenüberliegende Kreisabschnitte ein kreisförmiges Loch ergeben, durch die die Füße aushebbar sind, während die zwischen den Kreisabschnitten verbleibenden Stege ein Ausheben der Füße verhindern. Befinden sich die Füße im Bereich der Stege, kann in ein weiteres kreisförmiges Loch ein zwischen zwei Füßen an jeder Sitzseite angeordneter höhenverstellbarer Sperrstift eingreifen, der den Sitz gegen eine Bewegung festsetzt, dabei die Füße gegen die Stege preßt und den Sitz geringfügig nach oben abhebt. Die Füße sind als Senkschrauben ausgebildet und werden in Teilen des Sitzgestelles über Muttern derart gehalten, daß bei einem Hochziehen des Sperrstiftes der Sitz auf der Führungsbahn verschoben werden kann. Die Schrauben übernehmen lediglich eine Stützfunktion, während das Festsetzen des Sitzes über den über ein aufwendiges Gestänge verstellbaren Sperrstift erfolgt. Eine Verstellung des Sitzes in Fahrtrichtung ist nicht vorgesehen, allerdings theoretisch denkbar. Soll der Sitz aber verstellbar sein, so steht bei begrenzten Platzverhältnissen der für die Unterbringung des Sperrstiftes mit Gestänge erforderliche Raum nicht zur Verfügung und schränkt die Verstellmöglichkeiten des Sitzes unnötig ein. Das Anheben des Sitzes bei der Verriegelung wird ebenfalls als nachteilig angesehen.

Die mit der Erfindung zu lösende Aufgabe wird in einer einfach herzustellenden und wenige Einzelteile aufweisenden Sitzverstellvorrichtung gesehen, die in der Betriebsstellung eine Längsverstellung des Sitzes zuverlässig ausschließt. Diese Aufgabe ist dadurch gelöst, daß die beiden Längsschlitze in dem einen Teil zueinander einen Querabstand aufweisen, daß einer der beiden Teile mit wenigstens zwei in Fahrtrichtung verlaufenden Reihen Rasterstellen versehen ist, wobei jeweils eine Reihe Rasterstellen einem Längsschlitz zugeordnet ist und in der Betriebsstellung des Sitzes seitlichen Abstand zu dem zugehörigen Längsschlitz aufweist, und daß an dem anderen Teil zwei in der Betriebsstellung des Sitzes jeweils einer Reihe Rasterstellen zugeordnete und den gleichen Querabstand wie die Rasterstellen aufweisende Eingriffsteile feststehend angeordnet sind, von denen in der Betriebsstellung des Sitzes jeweils einer in eine Rasterstelle der zugeordneten Reihe Rasterstellen eingreift.

Sollte die Schraubverbindung sich nun einmal selbsttätig lockern, so verhindern die beiden Eingriffsteile, die infolge des Fahrergewichtes in ihren Rasterstellen verbleiben, zuverlässig ein selbständiges Verschieben des Sitzes. Da mehrere Rasterstellen hintereinander vorgesehen sind, ist eine stufenweise Längsverstellung des Sitzes bei gelockerter Schraubverbindung und bei angehobenem Sitz bzw. bei aus den Rasterstellen gehobenen Eingriffsteilen ganz einfach möglich. Zum Festsetzen sind lediglich die zwei Schrauben erforderlich, die außerdem noch von Hand angezogen werden können. Weitere Losteile entfallen. Sollten die Schrauben sich lockern, wird der Sitz durch die beiden, in die Einbuchtungen einrastenden Ausbuchtungen gegen ein selbsttätiges Längsverschieben gesichert.

In besonders einfacher und leicht herzustellender Weise kann, nach einem weiteren Vorschlag der Erfindung, jede Reihe von Rasterstellen aus, in den einen Teil eingearbeiteten und in der Schieberichtung hintereinander angeordneten Einbuchtungen, und jeder Eingriffsteil aus einer, an dem anderen Teil vorgesehenen Ausbuchtung bestehen.

Die Längsschlitze brauchen nach der Erfindung für eine ausreichende Sitzverstellung keine allzu große Länge aufzuweisen, wenn die Reihen von Rasterstellen oder Einbuchtungen seitlich neben den Längsschlitzen vorgesehen sind und eine Länge aufweisen, die der Länge der Längsschlitze zumindest in etwa entspricht.

Hierzu können auch die Ausbuchtungen als seitlich gerichtete Nocken neben den Schrauben vorgesehen sein.

Ein leichtes Verstellen des Sitzes ergibt sich dann, wenn die Ein- und Ausbuchtungen nach einem weiteren Vorschlag der Erfindung gerundet ausgebildet sind, da die Ausbuchtungen dann bereits nach einem leichten Anheben des Sitzes aus den Einbuchtungen rutschen können.

Um ein Verstellen um eine vertikale Achse bzw. ein seitliches Verstellen mit Sicherheit ausschließen zu können, kann nach der Erfindung ferner noch vorgesehen werden, daß der mit den Reihen von Einbuchtungen versehene Teil mit einer weiteren Einbuchtung ausgerüstet ist, in die wenigstens eine weitere Ausbuchtung eingreift, die an dem die beiden Ausbuchtungen aufweisenden Teil vorgesehen und zu diesem seitlich versetzt angeordnet ist.

Unschöne beim Verstellen manchmal entstehende Schleifspuren lassen sich erfindungsgemäß ebenfalls leicht vermeiden, wenn der die Ausbuchtungen aufweisende Teil aus Kunststoff hergestellt und mit dem Sitz verbunden ist.

Zweckmäßig können die Einbuchtungen in einer bis über zwei Laufräder geführten Abdeckung vorgesehen sein.

Schließlich kann nach der Erfindung noch vorgesehen werden, daß die Schrauben von unten durch die Längsschlitze gesteckt, in den Längsschlitzen gegen Herausfallen gesichert, durch im Querschnitt trichterförmig ausgebildete und sich nach oben verjüngende Durchgangslöcher in dem die Ausbuchtungen aufweisenden Teil führbar und über Muttern spannbar sind. Durch diese Maßnahme kann der Sitz leicht abgebaut und wieder montiert werden, wenn ein Zugang zu unter dem Sitz befindlichen Einrichtungen, beispielsweise zu Einfülltrichtern für Getriebeöl, erforderlich ist.

In der Zeichnung ist ein nachfolgend näher erläutertes Ausführungsbeispiel der Erfindung dargestellt. Es zeigt:
- Fig. 1: einen Kompaktschlepper in perspektivischer Darstellung,
- Fig. 2: eine perspektivische Darstellung der Sitzkonsole bei hochgeklapptem Fahrersitz,
- Fig. 3: die Sitzkonsole ohne Fahrersitz und in der Draufsicht,
- Fig. 4: die Unterseite der Sitzkonsole in perspektivischer Ansicht und
- Fig. 5: die Befestigung der Sitzkonsole.

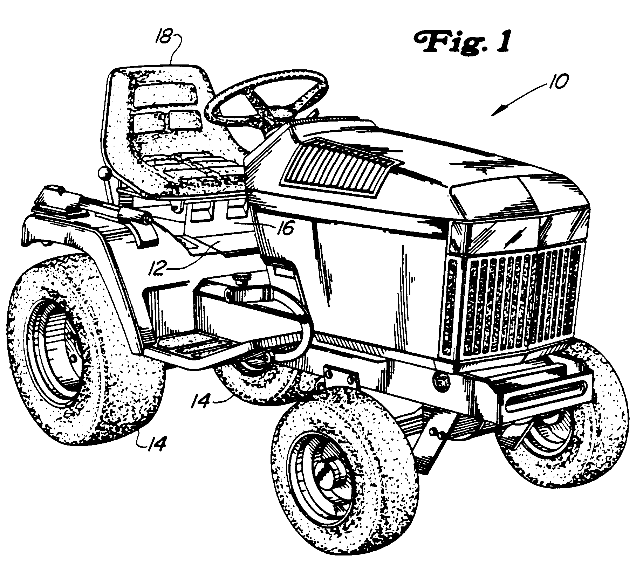

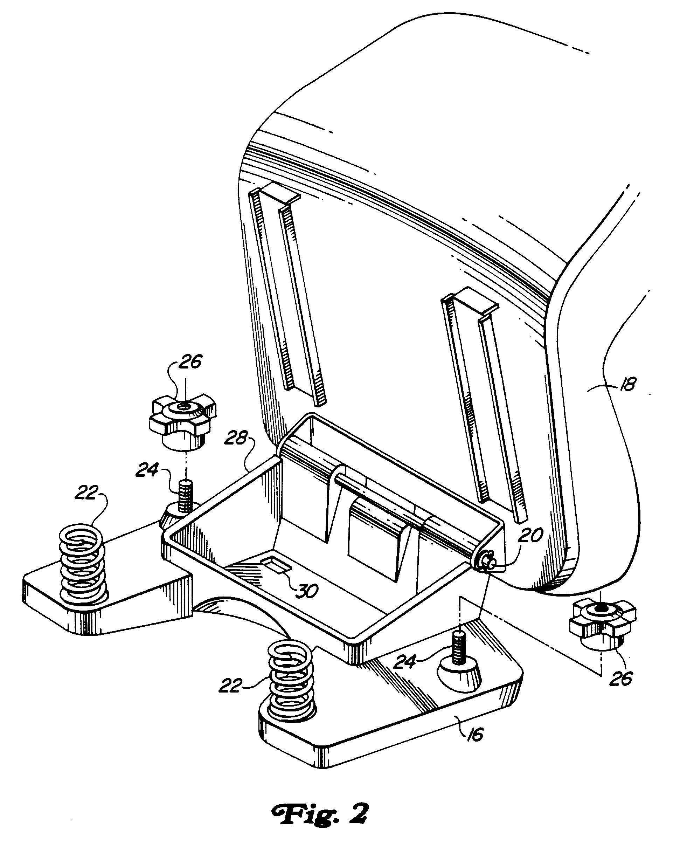

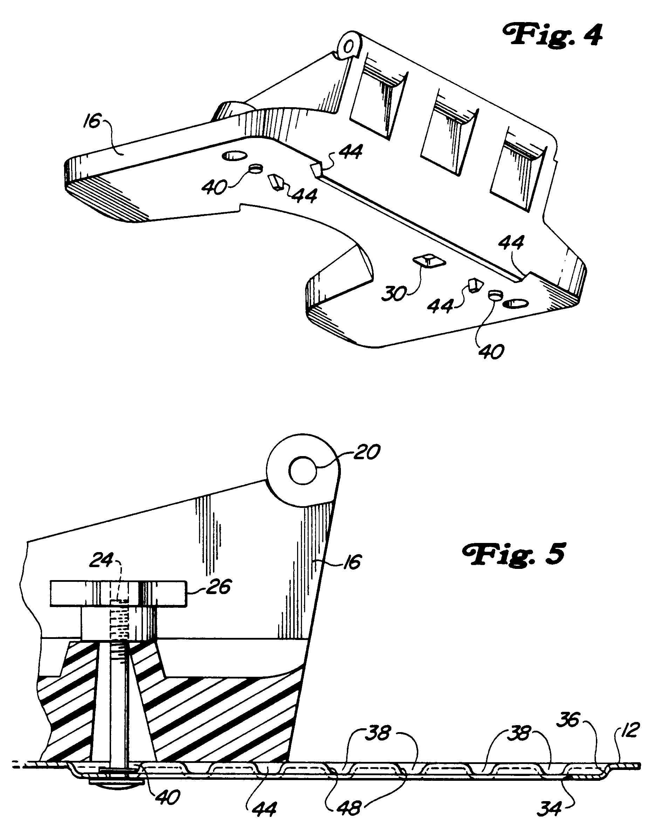

In Fig. 1 der Zeichnung ist ein Fahrzeug 10 in Form eines Kompaktschleppers dargestellt, das vorzugsweise für die Garten- und Rasenpflege einsetzbar ist. Es ist mit einem ersten Teil, der in den Ansprüchen als mit dem Fahrzeug verbundener Teil bezeichnet ist, oder einer Abdeckung 12 für rückwärtige Treibräder 14 ausgerüstet, die sich über die gesamte Fahrzeugbreite erstreckt. Mit der Abdeckung ist ein zweiter Teil, der in den Ansprüchen als mit dem Sitz 18 verbundener Teil bezeichnet ist, oder eine Sitzkonsole 16 verbindbar. Aus Fig. 2 ist ersichtlich, daß der Sitz 18 über eine Stange 20 an der Sitzkonsole 16 hochschwenkbar angelenkt ist. Die Sitzkonsole wird vorzugsweise im Injektionsverfahren aus Kunststoff, wie Plastik, gegossen. Zur Abfederung des Sitzes 18 dienen zwei hochstehende Federn 22, die am rückwärtigen Ende der Sitzkonsole 16 vorgesehen sind und auf denen der Sitz 18 in seiner Betriebsstellung lose aufliegt. Schrauben 24 sind von unten durch die Sitzkonsole und die Abdeckung 12 gesteckt und werden an ihren oberen Ende über Muttern 26 gesichert. Die Muttern 26 sind relativ groß ausgebildet, so daß sie von Hand angeschraubt und festgezogen werden können. Für die Befestigung des bevorzugten Ausführungsbeispiels reichen zwei Schrauben 26 aus, deren Kopf von unten gegen die Abdeckung 12 anliegt und die gegen Herausfallen gesichert sind. Fig. 5 läßt die Durchgangsbohrungen für die Schrauben 24 in der Sitzkonsole 16 erkennen. Sie sind im Querschnitt kegelig augebildet und verjüngen sich zu ihren oberen Enden hin, damit die mit dem Sitz 18 verbundene Sitzkonsole 16 zur Montage leicht auf die Schrauben 24 aufgesetzt werden kann. Ein Werkzeugkasten 28 ist noch in die Sitzkonsole 16 eingearbeitet, der bei hochgeklapptem Sitz zugänglich ist und durch den heruntergeklappten Sitz verschlossen wird. Eine Öffnung 30 ist in der Sitzkonsole 16 vorgesehen, durch die mit dem Fahrzeugmotor verbundene Kabel durchtreten, die mit einem Schalter am Sitz dergestalt verbunden sind, daß der Fahrzeugmotor nur angelassen werden kann, wenn eine Bedienungsperson auf dem Sitz sitzt, d. h. das Gewicht der Bedienungsperson schließt den Schalter und, wenn die Bedienungsperson den Sitz 18 verläßt, ohne den Fahrzeugmotor abzuschalten, wird der Fahrzeugmotor einschließlich der von ihm angetriebenen Geräte automatisch abgeschaltet. Ist die Öffnung 30 noch in dem Werkzeugkasten 28 angeordnet, so kann Schwitzwasser, das sich hier angesammelt haben könnte, durch die Öffnung 30 austreten.

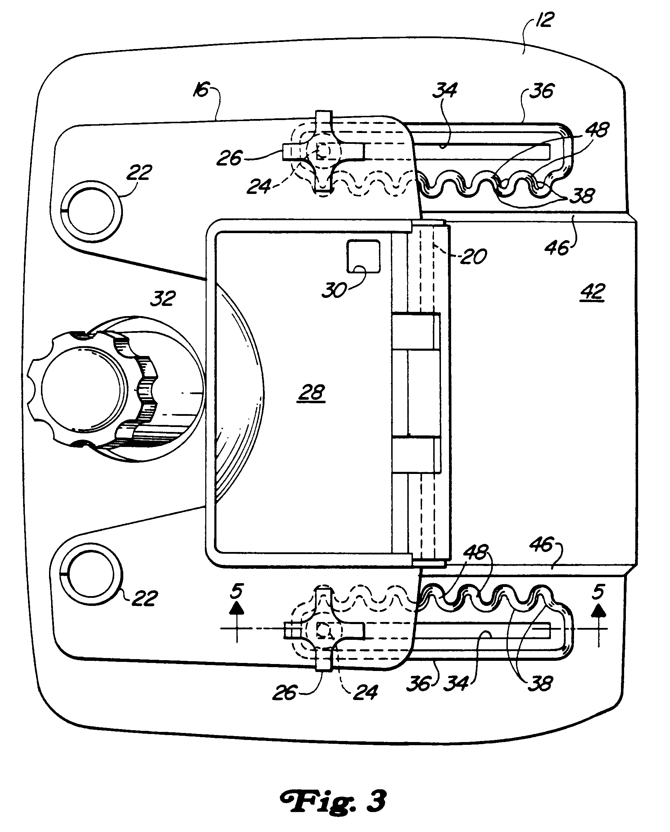

Fig. 3 zeigt die Abdeckung 12 mit angeschraubter Sitzkonsole 16 (ohne den Sitz) in der Draufsicht. Die Sitzkonsole 16 ist an ihrem rückwärtigen Ende ausgespart und erlaubt einen freien Zugang zu einem Tankeinfüllstutzen 32 zwischen den Federn 22 auch dann, wenn sich der Sitz in seiner vollständig nach rückwärts verstellten Position befinden sollte. Weitere Aggregate können sich noch unter der Sitzkonsole 16 befinden und, um zu diesen Zugang zu haben, muß der Sitz mit seiner Sitzkonsole 16 abgebaut werden, wozu lediglich die beiden Muttern 26 abgeschraubt werden müssen. Danach läßt sich der Sitz mit der Sitzkonsole 16 einfach abheben. Das durch die Öffnung geführte Kabel weist deshalb eine entsprechende Länge auf.

Zur Längsverstellung des Sitzes 18 sind in der Abdeckung zwei mit gegenseitigem Querabstand angeordnete Längsschlitze 34 eingearbeitet, durch die Schrauben 24 geführt und in denen die Schrauben längs verstellbar sind, wenn die Muttern gelockert sind und die Sitzkonsole 16 leicht angehoben wird. Ist der Sitz aber mit dem Gewicht einer Bedienungsperson belastet, so kann er auch bei gelockerten Muttern 26 nicht verstellt werden. Warum dies nicht erfolgen kann, wird nachfolgend für nur eine Seite der Längsverstellvorrichtung erläutert. Die andere Seite der Längsverstellvorrichtung ist spiegelbildlich ausgebildet. Die Abdeckung 12 ist so geformt oder ausgebildet, daß die Längsschlitze 34 sich in einem nach unten leicht abgesetzten Bereich 36 befinden, der sich von den Längsschlitzen auch noch eine kurze Distanz nach innen erstreckt und in etwa die gleiche Länge wie die Längsschlitze aufweist. Der von den Längsschlitzen aus gesehen nach unten und innen abgesetzte Bereich ist nun an seiner innen liegenden Längskante wellenförmig ausgebildet, so daß in Längsrichtung gesehen sieben hintereinanderliegende Einbuchtungen 38 entstehen, die etwa dreieckförmig ausgebildet und zu den Längsschlitzen 34 hin offen sind. Zwischen diesen Einbuchtungen hat die Abdeckung ihre normale Höhe und der Übergang von den Einbuchtungen zu den höher liegenden Teilen der Abdeckung ist nicht scharfkantig sondern allmählich bzw. gerundet. In die Einbuchtungen 38 an jeder Seite kann ein mit der Sitzkonsole verbundener und nach unten vorstehender Teil, der in den Ansprüchen als Eingriffsteil oder als Ausbuchtung 40 bezeichnet ist, eingreifen oder einrasten, wenn der Sitz 18 sich in seiner Betriebsstellung befindet. Die Einbuchtungen 38 entsprechen den einzelnen Sitzstellungen. Sind die Längsschlitze auch noch so angeordnet, daß ihr rückwärtiges Ende höher liegt als ihr vorderes, so wird bei der Verschiebung des Sitzes 18 in Längsrichtung auch noch eine Höhenverstellung erreicht. Die Eingriffsteile oder Ausbuchtungen 40 weisen eine Form auf, die der der Einbuchtungen im wesentlichen entspricht. Sie sind im Bereich der beiden Durchtrittslöcher für die Schrauben 24 vorgesehen und verhindern, wenn sie sich in einer der Einbuchtungen befinden, daß der Sitz 18 verstellt werden kann. Dies gilt in jedem Fall für eine Sitzverstellung in Längsrichtung aber auch zumindest in einem begrenzten Maße für eine Verstellung in seitlicher Richtung. Sind die beiden Eingriffsteile oder Ausbuchtungen 40 relativ klein ausgebildet, so empfiehlt sich noch eine zusätzliche Maßnahme. Hierzu ist deshalb zwischen den Längsschlitzen 34 etwa in der Mitte der Abdeckung 12 noch eine rechteckige Einbuchtung 42 vorgesehen, in die nach unten vorstehende Teile oder Ausbuchtungen 44, die ebenfalls an der Unterseite der Sitzkonsole vorgesehen sind, eingreifen können. In der Betriebsstellung des Sitzes 18 liegen diese Ausbuchtungen 44 gegen die beiden seitlichen Längskanten 46 der mittigen Einbuchtung 42 an und verhindern eine seitliche Verstellung des Sitzes und sein Drehen um eine Vertikalachse.

In der Betriebsstellung liegt die Sitzkonsole 16, an die der Sitz 18 über die Stange 20 hochschwenkbar angeschlossen ist, auf der Abdeckung 12 auf. Die Ausbuchtungen 44 in der Mitte der Sitzkonsole liegen gegen die Seitenwände der mittigen Einbuchtung 42 an. Vorzugsweise können vier Ausbuchtungen 44 vorgesehen werden, die im Bereich der Eckpunkte in die mittige Einbuchtung 42 eingreifen. Dies ist aber nicht unbedingt erforderlich, sofern die mittigen Ausbuchtungen zu den seitlichen längs versetzt angeordnet sind. In einem solchen Fall genügen zwei. Gleichfalls greifen die beiden an jeder Seite vorgesehenen Eingriffsteile oder Ausbuchtungen 40 in eine der Einbuchtungen 38 an jeder Seite ein. Die beiden Muttern 26 sind von Hand fest angezogen, wodurch die Sitzkonsole auf die Abdeckung 12 gepreßt ist. Die Verspannung der Sitzkonsole 16 mit der Abdeckung 12 über die Muttern 26 und die beiden Schrauben 24 verhindert bereits im Normalfall, daß der Sitz sich längs verschiebt. Die vorgesehenen Eingriffsteile verhindern ebenfalls eine Sitzverstellung in Längs- und Querrichtung und erlauben es, daß die Schrauben 24, die eine beträchtliche Länge haben, einen relativ kleinen Durchmesser haben können.

Bei längerem Einsatz insbesondere auf unebenem Terrain kann es leicht vorkommen, daß die beiden Muttern 26 sich lockern. Dadurch entfällt die reibschlüssige Verbindung des Sitzes mit dem Fahrzeug. Infolge der in die Einbuchtungen unter dem Gewicht des Fahrers eingreifenden Ausbuchtungen bleibt aber eine formschlüssige Verbindung noch erhalten, so daß auch bei gelockerten Muttern eine Verstellung des Sitzes in Längs- oder Querrichtung ausgeschlossen bleibt. Da die seitlichen Ausbuchtungen mit einem gewissen Spiel in die seitlichen Einbuchtungen eingreifen, kann der Sitz bei Muttern, die sich gelockert haben, kleine Ruckbewegungen verbunden mit Rattergeräuschen ausführen, so daß der Fahrer auf diese Situation aufmerksam wird und die Muttern 26 von Hand wieder fest anziehen kann.

Um den Sitz 18 längs verstellen zu können, braucht die Bedienungsperson die Muttern 26 nur etwas zu lockern, damit die Sitzkonsole 16 höhenbeweglich wird und die seitlichen Ausbuchtungen 40 die zwischen den seitlichen Einbuchtungen 38 liegenden Stege 48 überwinden können. In der Regel wird hierzu der Sitz 18 entsprechend hochgezogen. Aber auch ein entsprechendes Verschieben, bei dem die Ausbuchtungen 40 über die Stege 48 rutschen, ist möglich. Da die Sitzkonsole mit den angegossenen Ausbuchtungen aus Kunststoff besteht, entstehen dann auch keine unschönen Kratzspuren. Die Bedienungsperson verbringt dann den Sitz in die gewünschte neue Position und zieht die Muttern wieder an. Die Sitzpositionen entsprechen den einzelnen seitlichen Einbuchtungen 38. Da diese aber relativ dicht hintereinanderliegen, ist der Sitz praktisch stufenlos verstellbar.

Die vorbeschriebene Sitzverstellung benötigt nur zwei Schrauben mit den zugehörigen Muttern. Beim Abbau des Sitzes müssen nur die Muttern von den beiden Schrauben entfernt werden. Andere Losteile gibt es nicht, da auch die Schrauben in den Längsschlitzen gegen Herausfallen gesichert sind, beispielweise durch eine aufgeschraubte kleine Scheibe, die auf der Oberseite der Abdeckung 12 anliegt. Infolge der beiden Schrauben können auch die Längsschlitze entsprechend kurz ausgebildet werden und dennoch einen großen Verstellbereich ermöglichen. Bei einer Befestigung mit vier Schrauben, müßten die Längsschlitze um den Längenabstand der Schrauben verlängert werden.

## Patentansprüche

1. Vorrichtung zum Befestigen eines Sitzes (18) auf einem Fahrzeug (10), beispielsweise einem Kompaktschlepper für die Garten- und Rasenpflege, wozu ein erster mit dem Fahrzeug (10) verbundener Teil (Abdeckung 12) und ein zweiter mit dem Sitz (18) verbundener Teil (Sitzkonsole 16) vorgesehen ist, der eine der Teile (Abdeckung 12 oder Sitzkonsole 16) zwei in Fahrtrichtung verlaufende Längsschlitze (34) aufweist, beide Teile (Abdeckung 12 und Sitzkonsole 16) in der Betriebsstellung des Sitzes (18) gegeneinander anliegen, beide Teile (Abdeckung 12 und Sitzkonsole 16) in der Betriebsstellung des Sitzes (18) über mindestens zwei Schraubverbindungen festsetzbar sind und beide Teile (Abdeckung 12 und Sitzkonsole 16) bei gelockerten Schraubverbindungen gegeneinander verschiebbar sind, wobei jede Schraubverbindung eine durch einen Längsschlitz (34) geführte Schraube (24) aufweist, dadurch gekennzeichnet, daß die beiden Längsschlitze (34) in dem einen Teil (Abdeckung 12 oder Sitzkonsole 16) zueinander einen Querabstand aufweisen, daß einer der beiden Teile (Abdeckung 12 oder Sitzkonsole 16) mit wenigstens zwei in Fahrtrichtung verlaufenden Reihen Rasterstellen versehen ist, wobei jeweils eine Reihe Rasterstellen einem Längsschlitz (34) zugeordnet ist und in der Betriebsstellung des Sitzes (18) seitlichen Abstand zu dem zugehörigen Längsschlitz (34) aufweist, und daß an dem anderen Teil (Sitzkonsole 16 oder Abdeckung 12) zwei in der Betriebsstellung des Sitzes (18) jeweils einer Reihe Rasterstellen zugeordnete und den gleichen Querabstand wie die Rasterstellen aufweisende Eingriffsteile (40) feststehend angeordnet sind, von denen in der Betriebsstellung des Sitzes (18) jeweils einer in eine Rasterstelle der zugeordneten Reihe Rasterstellen eingreift.

2. Vorrichtung nach Anspruch 1, dadurch gekennzeichnet, daß jede Reihe von Rasterstellen aus in den einen Teil eingearbeitete und in der Schieberichtung hintereinander angeordnete Einbuchtungen (38) und jeder Eingriffsteil aus einer an dem anderen Teil vorgesehenen Ausbuchtung (40) besteht.

3. Vorrichtung nach Anspruch 1 oder 2, dadurch gekennzeichnet, daß die Reihen von Rasterstellen oder Einbuchtungen (38) eine Länge aufweisen, die der Länge der Längsschlitze (34) zumindest in etwa entspricht.

4. Vorrichtung nach Anspruch 2, dadurch gekennzeichnet, daß die Ausbuchtungen (40) als seitlich gerichtete Nocken neben den Schrauben (24) vorgesehen sind.

5. Vorrichtung nach einem oder mehreren der vorherigen Ansprüche, dadurch gekennzeichnet, daß die Ein- und Ausbuchtungen (38 und 40) gerundet ausgebildet sind.

6. Vorrichtung nach einem oder mehreren der vorherigen Ansprüche, dadurch gekennzeichnet, daß der mit den Reihen von Einbuchtungen (38) versehene Teil mit einer weiteren Einbuchtung (42) ausgerüstet ist, in die wenigstens eine weitere Ausbuchtung (44) eingreift, die an dem die beiden Ausbuchtungen (40) aufweisenden Teil vorgesehen und zu diesem seitlich versetzt angeordnet ist.

7. Vorrichtung nach einem oder mehreren der vorherigen Ansprüche, dadurch gekennzeichnet, daß der die Ausbuchtungen (40) aufweisende Teil aus Kunststoff hergestellt und mit dem Sitz (18) verbunden ist.

8. Vorrichtung nach einem oder mehreren der vorherigen Ansprüche, dadurch gekennzeichnet, daß die Einbuchtungen (38) in einer bis über zwei Laufräder (14) geführten Abdeckung (12) vorgesehen sind.

9. Vorrichtung nach Anspruch 1, dadurch gekennzeichnet, daß die Schrauben (24) von unten durch die Längsschlitze (34) gesteckt, in den Längsschlitzen gegen Herausfallen gesichert, durch im Querschnitt trichterförmig ausgebildete und sich nach oben verjüngende Durchgangslöcher in dem die Ausbuchtungen (40) aufweisenden Teil führbar und über Muttern (26) spannbar sind.

## Claims

1. A mechanism for securing a seat (18) to a vehicle (10), for example a compact tractor for garden and lawn care, for which there are provided a first part (decking 12) attached to the vehicle (10) and second part (seat base 16) attached to the seat, one of the parts (decking 12 or seat base 16) having two slots (34) running in the direction of travel, the two parts (decking 12 and seat base 16) bearing against each other in the working position of the seat (18), the two parts (decking 12 and seat base 16) being capable of being fixed by means of at least two screw connections and the two parts (decking 12 and seat base 16) being movable relative to one another with the screw connections loosened, wherein each screw connection comprises a screw (24) passed through a slot (34), characterized in that the two slots (34) in the one part (decking 12 or seat base 16) are transversely spaced from one another, in that one of the two parts (decking 12 or seat base 16) is provided with at least two rows of detent positions running in the direction of travel, wherein each row of detent positions is associated with one slot (34) and has a transverse spacing from the associated slot (34) in the working position of the seat (18), and in that fixedly arranged on the other part (seat base 16 or decking 12) there are two engagement parts (40) associated in the working position of the seat (18) with respective rows of detent positions and having the same transverse spacing as the detent positions, and of which each engages in a detent position of the associated row of detent positions in the working position of the seat (18).

2. A mechanism according to claim 1, characterized in that each row of detent positions consists of indentations (38) formed in the one part and arranged one after the other in the sliding direction and each engagement part consists of a projection (40) provided on the other part.

3. A mechanism according to claim 1 or 2, characterized in that the rows of detent positions or indentations (38) have a length which corresponds at least approximately to the length of the slots (34).

4. A mechanism according to claim 2, characterized in that the projections (40) are provided as laterally directed cams beside the screws (24).

5. A mechanism according to one or more of the preceding claims, characterized in that the indentations and projections (38, 40) are of rounded form.

6. A mechanism according to one or more of the preceding claims, characterized in that the part provided with the rows of indentations (38) is equipped with a further indentation (42), in which at least one further projection (44) engages, this being provided on the part having the two projections (40) and being arranged offset laterally relative thereto.

7. A mechanism according to one or more of the preceding claims, characterized in that the part having the projections (40) is made from plastics material and is attached to the seat (18).

8. A mechanism according to one or more of the preceding claims, characterized in that the indentations (38) are provided in a decking (12) runing over two running wheels (14).

9. A mechanism according to claim 1, characterized in that the screws (24) are passed from below through the slots (34), are secured in the slots against falling out, can be passed through passages with a funnel-like cross-section and tapering upwardly, formed in the part having the projections (40), and can be tightened by nuts (26).

## Revendications

1. Dispositif pour la fixation d'un siège (18) sur un véhicule (10), par exemple un petit tracteur pour le jardinage et l'entretien du gazon, dans lequel il est prévu à cet effet une première partie (tôle de recouvrement 12) reliée au véhicule (10) et une deuxième partie (support de siège 16) reliée au siège (18), l'une des parties (tôle de recouvrement 12 ou support de siège 16) présentant deux fentes longitudinales (34) qui s'étendent dans le sens de la marche, les deux parties (tôle de recouvrement 12 et support de siège 16) étant appliquées l'une contre l'autre dans la position d'utilisation du siège (18), les deux parties (tôle de recouvrement 12 et support de siège 16) pouvant être fixées l'une à l'autre, dans la position d'utilisation du siège (18), par l'intermédiaire d'au moins deux assemblages par vis et les deux parties (tôle de recouvrement 12 et support de siège 16) pouvant être déplacées l'une par rapport à l'autre lorsque les vis sont desserrées, chaque assemblage par vis présentant une vis (24) guidée dans une fente longitudinale (34), caractérisée en ce que les deux fentes longitudinales (34) situées, dans l'une (desdites) partie(s) (tôle de recouvrement 12 ou support de siège 16) présentent entre elles un écartement transversal, en ce que l'une des deux parties (tôle de recouvrement 12 ou support de siège 16) est pourvue d'au moins deux rangées de crans d'arrêt s'étendant dans le sens de la marche, une rangée de crans d'arrêt étant respectivement associée à une fente longitudinale (34) et présentant, dans la position d'utilisation du siège (18) un espacement latéral par rapport à la fente longitudinale (34) correspondante, et en ce qu'il est, prévu, sur l'autre (desdites) partie(s) (support de siège 16 ou tôle de recouvrement 12) deux éléments d'engagement (40) disposés fixes, correspondant chacun, dans la position d'utilisation du siège (18), à une rangée de crans d'arrêt et présentant le même écartement transversal que les crans d'arrêt, et dans la position d'utilisation du siège (18) chacun de ces éléments d'engagement pénétrant dans un cran d'arrêt de la rangée de crans d'arrêt qui lui est associée.

2. Dispositif selon la revendication 1, caractérisé en ce que chaque rangée de crans d'arrêt est constituée par des évidements (38) pratiqués dans l'une des parties et disposés l'un derrière l'autre dans le sens du déplacement et en ce que chaque élément d'engagement consiste en une saillie (40) prévue sur l'autre partie.

3. Dispositif selon la revendication 1 ou 2, caractérisé en ce que les rangées de crans d'arrêt ou d'évidements (38) présentent une longueur qui correspond au moins à peu près à la longueur de la fente longitudinale (34).

4. Dispositif selon la revendication 2, caractérisée en ce que les saillies (40) sont prévues sous la forme d'ergots dirigés latéralement à côté des vis (24).

5. Dispositif selon une ou plusieurs des revendications précédentes, caractérisé en ce que les évidements et les saillies (38 et 40) sont réalisés arrondis.

6. Dispositif selon une ou plusieurs des revendications précédentes, caractérisé en ce que la partie pourvue des rangées d'évidements (38) comporte un évidement supplémentaire (42) dans lequel pénètre au moins une saillie supplémentaire (44), qui est prévue sur la partie comportant les deux saillies (40) et qui est disposée latéralement décalée par rapport à celles-ci.

7. Dispositif selon une ou plusieurs des revendications précédentes, caractérisé en ce que la partie comportant les saillies (40) est fabriquée en matière plastique et est fixée au siège (18).

8. Dispositif selon une ou plusieurs des revendications précédentes, caractérisé en ce que les évidements (38) sont prévus dans une tôle de recouvrement (12) qui s'étend jusqu'au-dessus de deux roues de roulement (14).

9. Dispositif selon la revendication 1, caractérisé en ce que les vis (24), introduites depuis le dessous dans les fentes longitudinales (34), sont maintenues dans les fentes longitudinales contre tout risque de chute et peuvent être guidées, dans la partie présentant les saillies (40), dans des trous de passage de section transversale en entonnoir et allant en s'enfilant vers le haut, et y être bloqués par l'intermédiaire d'écrous (26).
